# EUROPEAN PATENT SPECIFICATION

(11) **EP 3 355 702 B1**
(45) Date of publication and mention of the grant of the patent: **12.02.2020**
(21) Application number: 16769943.8
(22) Date of filing: 15.09.2016
(51) Int. Cl.: A23D 7/005, A23D 9/00, A23D 9/04, C11C 3/10

(54) **LOW SAFA FAT COMPOSITION, AERATED EMULSION AND METHOD**
FETTZUSAMMENSETZUNG MIT NIEDRIGEM GEHALT AN GESÄTTIGTER FETTSÄURE, BELÜFTETE EMULSION UND VERFAHREN
COMPOSITION À FAIBLE TENEUR EN GRAISSE SATURÉE, ÉMULSION AÉRÉE ET PROCÉDÉ

(30) Priority: 29.09.2015 EP 15275206
(43) Date of publication of application: 08.08.2018
(73) Proprietor: Bunge Loders Croklaan B.V., 1521 AZ Wormerveer (NL)
(72) Inventor: ROOIJEN, Christiaan van, 1521 AZ Wormerveer (NL); SMIT, Helen Cornelia, 1521 AZ Wormerveer (NL); ZAAL, Evelien, 1521 AZ Wormerveer (NL); DE LIMA, Christopher Mark, 1521 AZ Wormerveer (NL)
(74) Representative: Potter Clarkson
(86) International application number: PCT/EP2016/071891
(87) International publication number: WO 2017/055101

(56) References cited:
- EP-A1- 1 402 784
- EP-A1- 1 894 471
- EP-A1- 2 443 935
- EP-B1- 0 682 477
- WO-A1-2009/067069
- US-A1- 2011 177 227

## Description

### Background

The creation of aerated emulsions, such as whipped creams, is a well-tested way of producing bakery fillings. Since the removal of hydrogenated fats, the standard way of making such bakery creams is to use saturated fats to stabilize such emulsions. Saturate fats form structures that encapsulate oil, air and water in the emulsion. However, saturated fats may be undesirable from a nutritional point of view. Saturated fats may reduce the flavor release and mouthfeel of products.

In order to reduce saturated fat levels but still enable stable aerated emulsion, fat replacers and stabilizers such as emulsifiers may be used. In products based on vegetable oils or fats, fat based emulsifiers may be added to provide whippability and foam stability. They induce the formation of a stable emulsion, may improve the rate of aeration, and the total aeration (whipping overrun) that may be obtained. Fat based emulsifiers typically used to stabilize oil-in-water emulsions include: lecithin, hydroxylated lecithin; mono, di, or polyglycerides of fatty acids, such as stearin and palmitin mono and diglycerides, polyoxyethylene ethers of fatty esters of polyhydric alcohols, such as the polyoxyethylene ethers of sorbitan monostearate (polysorbate 60) or the polyoxyethylene ethers of sorbitan distearate; fatty esters of polyhydric alcohols such as sorbitan monostearate; polyglycerol esters of mono and diglycerides such as hexaglyceryl distearate; mono- and diesters of glycols such as propylene glycol monostearate, and propylene glycol monopalmitate, succinoylated monoglycerides; and the esters of carboxylic acids such as lactic, citric, and tartaric acids with the mono- and diglycerides of fatty acids such as glycerol lacto palmitate and glycerol lacto stearate, and calcium or sodium stearoyl lactylates and all members of the sucrose ester family thereof, all varieties of diacetyltartaric esters of fatty acids, and distilled lactylated or acetylated monglycerides, and the like. Emulsifiers are typically applied in amounts from 0.1% to 5% by weight of the total emulsion. Examples of emulsifier systems are known in the art.

For instance EP455288 concerns whippable non-dairy creams with low fat levels (15-25 wt%), that possess excellent properties, like a whipping time less than 6 min. EP0682477 describes whippable, water-continuous fat emulsions comprising 10-40 wt % of a fat mixture with a composition as obtainable by blending at least fats A and B: 0.01-2 wt % of a thickener: 0.01-2 wt % of an emulsifier system and 1-8 wt % of a milk protein compound: fats A and B being: low in SAFA and free of trans ( = fat A), high in PUFA ( = fat B), while the N5 of the fat mixture ranges from 20 to 40 and the N35 is less than 5 and the SAFA content of the fat mixture is less than 35 mol %. EP1894471 describes aerated food products such as ice-creams comprising at least 0.5 wt% of a fat mixture having 50-70% unsaturated fatty acids, 1.5-15% C₁₂-C₁₄ fatty acids, at least 20% palmitic acid and at least 30% oleic acid.

It is an object of the invention to enable whippable low SAFA emulsions without added stabilizers.

It is another object of the invention to enable whippable low SAFA emulsions with enhanced flavor release properties.

The invention relates to a low SAFA fat composition for use in an aerated emulsion, such as a filling cream, wherein the composition comprises less than 35% by weight of SAFA based on the total weight of fatty acid residues; wherein the composition comprises from 2-8 % by weight C12:0 and from 12-15% by weight C16:0; and wherein the composition is preferably whippable to a stable cream with water without the addition of stabilizers. Whippable implies that the composition can be whipped to an aerated composition within a few minutes (1 to 10 minutes) at room temperature (20 °C) or at lower temperatures such as 15 °C and remains sufficiently stable (i.e., it retains its physical shape) for at least 2 hours. The whippable product may be whipped with or without additional ingredients such as various forms of sugars.

It is advantageous if the composition comprises less than 30% by weight of SAFA, preferably less than 25%.

Preferably, the composition comprises from 3-6% by weight of C12:0.

In a preferred embodiment, the composition further comprises from 1-5% C18:0.

Preferably, the composition comprises C12 and C16 in a ration of from 1:5 to 1:2 by weight.

It is preferred if the composition comprises an interesterified randomized oil mixture of palm olein and palm kernel stearine.

In a preferred embodiment, the composition comprises an interesterified randomized oil mixture of palm olein and palm kernel stearine.

More preferably, the composition is an interesterified randomized oil mixture of palm olein and palm kernel stearine, subsequently mixed with a liquid oil, wherein the liquid oil is selected from sunflower oil and rapeseed oil.

It is preferred if the composition is whippable with water in a fat to water weight ratio of from 20:1 to 1:1, more preferably from 10:1 to 2:1, more preferably from 5:1 to 2:1.

Preferably, the fat composition has a solid fat content of from 10-30% in the temperature range from 5-20°C, and a solid fat content of from 1-10% in the temperature range from 25-35 °C. Solid Fat content (SFC) is determined using NMR spectroscopy according to the IUPAC 2.150a method. Such a melting profile was found to give a pleasant flavor impact in whipped creams prepared with such mixtures, both when evaluated in a cooled environment (eg under 10 °C) as well as at room temperature (20 °C).

More preferably, the fat composition has a solid fat content of from 15-25% in the temperature range from 5-15°C, and a solid fat content of from 5-10% at 25 °C and a solid fat content below 5% at 35°C.

It is advantageous if the composition comprises less than 3 % by weight of diglycerides, preferably less than 1%; and wherein the composition comprises less than 1% by weight monoglycerides, preferably less than 0.5% by weight, more preferably less than 0.1% by weight.

In a preferred embodiment, the composition comprises C16 and C18 which when combined comprise more than 50% of the fatty acid residues, and wherein C16 and C18:1 are present in a ratio of from 3:1 to 1:3, preferably approximately 2:1.

Fatty acid residue composition was determined using fatty acid methyl ester analysis (FAME) gas chromatography according to ISO 15304. Cx:y refers to a fatty acid having x carbon atoms and y double bonds; The extension 'c' refers to cis fatty acids and 't' refers to trans fatty acids. Fatty acids are straight chain carboxylic acids having from 8 to 24 carbon atoms and optionally one or more double bonds.

The invention further relates to an aerated emulsion, such as a filling cream, comprising a fat composition as described herein, carbohydrates, and water.

In a preferred embodiment, the emulsion comprises from 15-75% of a fat composition according to the preceding claims, from 20-30% carbohydrates, and from 5-50% water, wherein the carbohydrates, water and fat amount up to a 100%, and wherein the aerated emulsion optionally comprises other ingredients.

The invention will now be further elucidated by the following non-limiting examples.

### Examples

### Example 1: preparation of fat compositions

A fat composition A as described herein was prepared based on an interesterified mixture of palm olein and palm kernel stearine as a source of C12:0, subsequently blended with rape seed oil, with a calculated IV value of 92.6. As references, reference 1 is a blend of an interesterified palm olein midfraction mixed with an interesterified palm olein, and reference 2 is a blend of interesterified palm and palm kernel, blended with two other mid fractions of palm.

Analytical results are displayed in table 1. The fatty acid compositions are characterized in the content of saturated fatty acids (SAFA), monounsaturated fatty acids (MUFA) and polyunsaturated fatty acids (PUFA). SAFA are fatty acids without unsaturated bonds, such as palmitic acid (C16:0) and oleic acid (C18:0). As defined herein, SAFA is the total of C8:0, C10:0, C12:0, C14:0, C16:0, C17:0, C18:0, C20:0, C22:0 and C24:0. Mono unsaturated fatty acids (MUFA) are fatty acids having a single carbon-carbon double bond, which may be in either the cis or trans configuration. Total trans is the total amount of trans fatty acids.

The group of MUFA includes but is not restricted to palmitoleic acid (C16:1 cis) and oleic acid (C18:1 cis). As defined herein, MUFA is the total of C16:1 c/t, C18:1 c/t, C20:1 c/t, C22:1 c/t and C24:1 c/t; wherein c/t indicates the combined amounts of cis and trans fatty acids for that particular number of carbon atoms. Polyunsaturated fatty acids (PUFA) have more than one carbon-carbon double bond, such as two or three double bonds. SAFA, MUFA and PUFA values are calculated by adding up amounts of the respective compounds as determined through the FAME analysis.

**Table 1: Analytical results**

| | **A** | **Ref 1** | **Ref 2** |
|---|---|---|---|
| **C6:0** | 0.0 | 0.0 | 0.0 |
| **C8:0** | 0.2 | 0.0 | 0.8 |
| **C10:0** | 0.2 | 0.0 | 1.1 |
| **C12:0** | 3.3 | 0.2 | 17.5 |
| **C14:0** | 1.3 | 1.2 | 6.0 |
| **C15:0** | 0.1 | 0.0 | 0.0 |
| **C16:0** | 14.8 | 45.4 | 41.1 |
| **C16:1** | 0.2 | 0.2 | 0.1 |
| **C17:0** | 0.1 | 0.1 | 0.1 |
| **C18:0** | 2.1 | 4.5 | 4.1 |
| **C18:1** | 51.3 | 36.9 | 23.7 |
| **C18:2** | 16.2 | 10.6 | 4.9 |
| **C18:3** | 7.6 | 0.3 | 0.1 |
| **C20:0** | 0.5 | 0.3 | 0.3 |
| **C20:1** | 1.2 | 0.1 | 0.1 |
| **C20:2** | 0.0 | 0.0 | 0.0 |
| **C22:0** | 0.3 | 0.0 | 0.0 |
| **C22:1** | 0.3 | 0.0 | 0.0 |
| **C24:0** | 0.1 | 0.0 | 0.1 |
| **C24:1** | 0.1 | 0.0 | 0.0 |
| **Total** | 100.0 | 100.0 | 100.0 |
| | | | |
| **SAFA** | 23.0 | 51.9 | 71.1 |
| **MUFA** | 53.2 | 37.2 | 23.9 |
| **PUFA** | 23.8 | 10.9 | 5.0 |
| **trans** | 0.0 | 0.1 | 0.0 |

### Example 2: Solid fat content

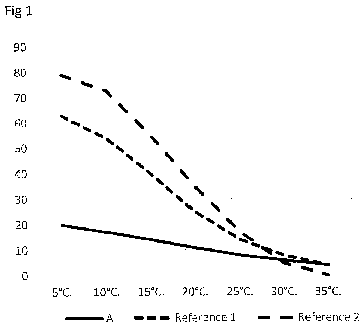

The solid fat content of the composition according to the invention and the two references were measured at a number of temperatures by NMR spectroscopy. The results are displayed in the table and graphically shown in figure 1.

| **N** | **A** | **Reference 1** | **Reference** 2 |
|---|---|---|---|
| **5°C.** | 20 | 63 | 79 |
| **10°C.** | 17 | 54 | 73 |
| **15°C.** | 14 | 40 | 55 |
| **20°C.** | 11 | 25 | 35 |
| **25°C.** | 8 | 14 | 17 |
| **30°C.** | 6 | 8 | 5 |
| **35°C.** | 4 | 4 | 0 |

Solid Fat content (SFC) is determined using NMR spectroscopy according to the IUPAC 2.150a method. Solid fat contents at x °C are denoted as Nx. For example, a solid fat content at 20 °C is referred to as N20.

### Example 3: cream composition

The fat compositions were used to prepare emulsions with water levels from 5% up to 50%. Additional ingredients may be used to produce a bakery cream, for instance fats and oil (10-50%), carbohydrates, in particular sugars (glucose syrup, saccharide, dextrose, lactose etc.), and often milk powder and are used to create the cream.

Cream compositions suitable as fillings for bakery were prepared using the fat compositions described in example 1, using the following recipe:

| **Ingredients** | **g** | **%** |
|---|---|---|
| water | 250 | 27.6 |
| fat composition | 250 | 27.6 |
| dextrose | 60 | 6.6 |
| sugar | 100 | 11.0 |
| Sorbitol syrup | 20 | 2.2 |
| Fructose syrup | 80 | 8.8 |
| Glycerine | 20 | 2.2 |
| starch | 20 | 2.2 |
| whey powder | 4 | 0.4 |
| skimmed milk powder | 100 | 11.0 |
| Rose flavour | 1 | 0.1 |
| total | 905 | 100.0 |

The ingredients were mixed and the resulting emulsions were whipped into an aerated emulsion/cream with a density of 0.61kg/m3 (A), 0.62 kg/m3 (ref1) and 0.66 kg/m3 (ref2).

The cream composition based on fat composition A had approximately 23% SAFA by weight.

### Example 4: Sensory profile

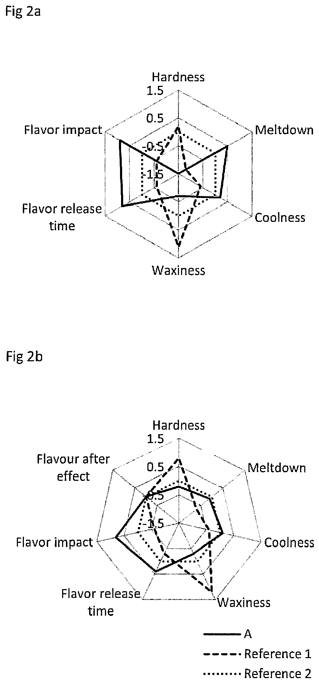

The creams were subjected to a trained sensory test panel for the composition stored at 4°C and 20°C. The creams were evaluated for Hardness, Meltdown, Coolness, Waxiness, Flavor Release time and Flavor Impact. The sensory profile at 4 °C is shown in Fig 2a, the sensory profile at 20 °C is shown in Fig 2b.

From the sensory profiles it is shown that the cream prepared using fat composition A is softer than the references at lower temperatures, has a higher meltdown and coolness, lower waxiness and a very notable improved (shorter) flavor release time and higher flavor impact.

## Claims

1. Low SAFA fat composition for use in an aerated emulsion, such as a filling cream,
wherein the composition comprises less than 35% by weight of SAFA based on the total weight of fatty acid residues;
wherein the composition comprises from 2-8 % by weight C12:0 and from 12-15% by weight C16:0;
and wherein the composition is whippable to a stable cream with water without the addition of stabilizers.

2. Fat composition according to claim 1 wherein the composition comprises less than 30% by weight of SAFA, preferably less than 25%.

3. Fat composition according to claim 1 or 2, wherein the composition comprises from 3-6% by weight of C12:0.

4. Fat composition according to any of the preceding claims, wherein the composition further comprises from 1-5% by weight C18:0.

5. Fat composition according to any of the preceding claims, wherein the composition comprises C12 and C16 in a ratio of from 1:5 to 1:2 by weight.

6. Fat composition according to any of the preceding claims, wherein the composition comprises an interesterified randomized oil mixture of palm olein and a source of C12:0.

7. Fat composition according to any of the preceding claims, wherein the composition comprises an interesterified randomized oil mixture of palm olein and palm kernel stearine.

8. Fat composition according to claim 6 or 7 wherein the composition is an interesterified randomized oil mixture of palm olein and palm kernel stearine, subsequently mixed with a liquid oil, wherein the liquid oil is selected from sunflower oil and rapeseed oil.

9. Fat composition according to any of the preceding claims, wherein the composition is whippable with water in a fat to water ratio of from 20:1 to 1:1, more preferably from 10:1 to 2:1, more preferably from 5:1 to 2:1.

10. Fat composition according to any of the preceding claims, wherein the fat composition has a solid fat content of from 10-30% in the temperature range from 5-20 °C, and a solid fat content of from 1-10% in the temperature range from 25-35 °C.

11. Fat composition accordingto any of the preceding claims, wherein the fat composition has a solid fat content of from 15-25% in the temperature range from 5-15 °C, and a solid fat content of from 5-10% at 25 °C and a solid fat content below 5% at 35 °C.

12. Fat composition according to any of the preceding claims, wherein the composition comprises less than 3 % by weight of diglycerides, preferably less than 1%; and wherein the composition comprises less than 1% by weight monoglycerides, preferably less than 0.5% by weight, more preferably less than 0.1% by weight.

13. Fat composition according to any of the preceding claims, wherein the composition comprises C16 and C18 which when combined comprise more than 50% of the fatty acid residues, and wherein C16 and C18:1 are present in a weight ratio of from 3:1 to 1:3, preferably approximately 2:1.

14. Aerated emulsion, such as a filling cream, comprising
- a fat composition according to any of the preceding claims
- carbohydrates, and
- water.

15. Aerated emulsion according to claim 14, comprising
- from 15-75% of a fat composition according to the preceding claims
- from 20-30% carbohydrates, and
- from 5-50% water,
wherein the carbohydrates, water and fat amount up to 100%, and wherein the aerated emulsion optionally comprises other ingredients.

## Patentansprüche

1. Fettzusammensetzung mit niedrigem SAFA-Gehalt zur Verwendung in einer belüfteten Emulsion, wie etwa einer Füllungscreme, wobei die Zusammensetzung weniger als 35 Gew.-% SAFA, bezogen auf das Gesamtgewicht der Fettsäurereste, umfasst; wobei die Zusammensetzung 2-8 Gew.-% C12:0 und 12-15 Gew.-% C16:0 umfasst; und wobei die Zusammensetzung ohne die Zugabe von Stabilisatoren mit Wasser zu einer stabilen Creme aufschlagbar ist.

2. Fettzusammensetzung nach Anspruch 1, wobei die Zusammensetzung weniger als 30 Gew.-% SAFA, bevorzugt weniger als 25 %, umfasst.

3. Fettzusammensetzung nach Anspruch 1 oder 2, wobei die Zusammensetzung 3-6 Gew.-% C12:0 umfasst.

4. Fettzusammensetzung nach einem der vorhergehenden Ansprüche, wobei die Zusammensetzung ferner 1-5 Gew.-% C18:0 umfasst.

5. Fettzusammensetzung nach einem der vorhergehenden Ansprüche, wobei die Zusammensetzung C12 und C16 in einem Gewichtsverhältnis von 1:5 bis 1:2 umfasst.

6. Fettzusammensetzung nach einem der vorhergehenden Ansprüche, wobei die Zusammensetzung ein umgeestertes, randomisiertes Ölgemisch aus Palmolein und einer Quelle von C12:0 umfasst.

7. Fettzusammensetzung nach einem der vorhergehenden Ansprüche, wobei die Zusammensetzung ein umgeestertes, randomisiertes Ölgemisch aus Palmolein und Palmkernstearin umfasst.

8. Fettzusammensetzung nach Anspruch 6 oder 7, wobei die Zusammensetzung ein umgeestertes, randomisiertes Ölgemisch aus Palmolein und Palmkernstearin ist, das anschließend mit einem flüssigen Öl gemischt wird, wobei das flüssige Öl aus Sonnenblumenöl und Rapsöl ausgewählt ist.

9. Fettzusammensetzung nach einem der vorhergehenden Ansprüche, wobei die Zusammensetzung mit Wasser in einem Fett/Wasser-Verhältnis von 20:1 bis 1:1, stärker bevorzugt von 10:1 bis 2:1, stärker bevorzugt von 5:1 bis 2:1, aufschlagbar ist.

10. Fettzusammensetzung nach einem der vorhergehenden Ansprüche, wobei die Fettzusammensetzung einen festen Fettgehalt von 10-30 % in dem Temperaturbereich von 5-20 °C und einen festen Fettgehalt von 1-10 % in dem Temperaturbereich von 25-35 °C aufweist.

11. Fettzusammensetzung nach einem der vorhergehenden Ansprüche, wobei die Fettzusammensetzung einen festen Fettgehalt von 15-25 % in dem Temperaturbereich von 5-15 °C und einen festen Fettgehalt von 5-10 % bei 25 °C und einen festen Fettgehalt unter 5 % bei 35 °C aufweist.

12. Fettzusammensetzung nach einem der vorhergehenden Ansprüche, wobei die Zusammensetzung weniger als 3 Gew.-% Diglyceride, bevorzugt weniger als 1 %, umfasst; und
wobei die Zusammensetzung weniger als 1 Gew.-% Monoglyceride, bevorzugt weniger als 0,5 Gew.-%, stärker bevorzugt weniger als 0,1 Gew.-%, umfasst.

13. Fettzusammensetzung nach einem der vorhergehenden Ansprüche, wobei die Zusammensetzung C16 und C18 umfasst, die in Kombination mehr als 50 % der Fettsäurereste umfassen, und wobei C16 und C18:1 in einem Gewichtsverhältnis von 3:1 bis 1:3, vorzugsweise etwa 2:1, vorhanden sind.

14. Belüftete Emulsion, wie etwa eine Füllungscreme, umfassend
- eine Fettzusammensetzung nach einem der vorhergehenden Ansprüche
- Kohlenhydrate, und
- Wasser.

15. Belüftete Emulsion nach Anspruch 14, umfassend
- 15-75 % einer Fettzusammensetzung nach den vorhergehenden Ansprüchen
- 20-30 % Kohlenhydrate und
- 5-50 % Wasser,
wobei die Kohlenhydrate, das Wasser und das Fett bis zu 100 % betragen, und wobei die belüftete Emulsion optional andere Bestandteile umfasst.

## Revendications

1. Composition à faible teneur en matières grasses SAFA destinée à être utilisée dans une émulsion aérée, telle qu'une crème de remplissage, dans laquelle la composition comprend moins de 35 % en poids de SAFA sur la base du poids total des résidus d'acides gras ;
dans laquelle la composition comprend de 2 à 8 % en poids de C12:0 et de 12 à 15 % en poids de C16:0 ;
et dans laquelle la composition peut être fouettée en une crème stable avec de l'eau sans addition de stabilisants.

2. Composition de matières grasses selon la revendication 1 dans laquelle la composition comprend moins de 30 % en poids de SAFA, de préférence moins de 25 %.

3. Composition de matières grasses selon la revendication 1 ou 2, dans laquelle la composition comprend de 3 à 6 % en poids de C12:0.

4. Composition de matières grasses selon l'une quelconque des revendications précédentes, dans laquelle la composition comprend en outre de 1 à 5 % en poids de C18:0.

5. Composition de matières grasses selon l'une quelconque des revendications précédentes, dans laquelle la composition comprend du C12 et C16 dans un rapport de 1:5 à 1:2 en poids.

6. Composition de matières grasses selon l'une quelconque des revendications précédentes, dans laquelle la composition comprend un mélange d'huile randomisée interestérifiée d'oléine de palme et d'une source de C12:0.

7. Composition de matières grasses selon l'une quelconque des revendications précédentes, dans laquelle la composition comprend un mélange d'huile randomisée interestérifiée d'oléine de palme et de stéarine de palmiste.

8. Composition de matières grasses selon la revendication 6 ou 7 dans laquelle la composition est un mélange d'huile randomisée interestérifiée d'oléine de palme et de stéarine de palmiste, mélangé ensuite à une huile liquide, dans laquelle l'huile liquide est choisie parmi l'huile de tournesol et l'huile de colza.

9. Composition de matières grasses selon l'une quelconque des revendications précédentes, dans laquelle la composition est fouettable avec de l'eau dans un rapport graisse/eau de 20:1 à 1:1, plus préférablement de 10:1 à 2:1, plus préférablement de 5:1 à 2:1.

10. Composition de matières grasses selon l'une quelconque des revendications précédentes, dans laquelle la composition de matières grasses a une teneur en matières grasses solides de 10 à 30 % dans la plage de températures de 5 à 20 °C, et une teneur en matières grasses solides de 1 à 10 % dans la plage de température de 25 à 35 °C.

11. Composition de matières grasses selon l'une quelconque des revendications précédentes, dans laquelle la composition de matières grasses a une teneur en matières grasses solides de 15 à 25 % dans la plage de températures de 5 à 15 °C et une teneur en matières grasses solides de 5 à 10 % à 25 °C et une teneur en matières grasses solides inférieure à 5 % à 35 °C.

12. Composition de matières grasses selon l'une quelconque des revendications précédentes, dans laquelle la composition comprend moins de 3 % en poids de diglycérides, de préférence moins de 1 % ; et
dans laquelle la composition comprend moins de 1 % en poids de monoglycérides, de préférence moins de 0,5 % en poids, plus préférablement moins de 0,1 % en poids.

13. Composition de matières grasses selon l'une quelconque des revendications précédentes, dans laquelle la composition comprend du C16 et du C18 qui, lorsqu'ils sont combinés, contiennent plus de 50 % des résidus d'acide gras, et dans laquelle les C16 et C18:1 sont présents dans un rapport pondéral de 3:1 à 1:3, de préférence d'environ 2:1.

14. Émulsion aérée, telle qu'une crème de remplissage, comprenant
- une composition de matières grasses selon l'une quelconque des revendications précédentes
- des hydrates de carbone, et
- de l'eau.

15. Émulsion aérée selon la revendication 14, comprenant
- de 15 à 75 % d'une composition de matières grasses selon les revendications précédentes
- de 20 à 30 % de glucides, et
- de 5 à 50 % d'eau,
dans laquelle les glucides, l'eau et les matières grasses représentent jusqu'à 100 %, et dans laquelle l'émulsion aérée comprend éventuellement d'autres ingrédients.
